(19) Europäisches Patentamt / European Patent Office / Office européen des brevets

(11) **EP 3 096 029 A1**

(12) **EUROPEAN PATENT APPLICATION**
published in accordance with Art. 153(4) EPC

(43) Date of publication:
**23.11.2016 Bulletin 2016/47**

(51) Int Cl.:
**F16C 29/06** *(2006.01)*

(21) Application number: **15737471.1**

(86) International application number:
**PCT/JP2015/000165**

(22) Date of filing: **15.01.2015**

(87) International publication number:
**WO 2015/107900 (23.07.2015 Gazette 2015/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.01.2014 JP 2014007005**

(71) Applicant: **NSK Ltd.**
**Tokyo 141-8560 (JP)**

(72) Inventor: **KANO, Kenji**
**Hanyu-shi**
**Saitama 348-8506 (JP)**

(74) Representative: **Klingseisen, Franz**
**Klingseisen, Rings & Partner**
**Patentanwälte**
**Postfach 10 15 61**
**80089 München (DE)**

(54) **LINEAR MOTION GUIDING DEVICE**

(57)     Provided is a linear motion guiding device that appropriate length and depth suitable for use condition for a tapered portion formed on an end of a guide rail are defined and a reduction in durability of a connecting portion can be surely suppressed. Therefore, in the linear motion guiding device (1), the end of the guide rail (10) is gradually reduced in a longitudinal direction to configure the tapered portion (10B), and a length L of the tapered portion (10B) is not less than 0.5 times and not more than 1.5 times a diameter r of a rolling body (30), and a depth t of the tapered portion (10B), a width direction connection level difference amount A of one guide rail (10) and another guide rail (10), a rolling body elastic deformation amount B, and a contact angle $\alpha$ of the rolling body (30) relative to a raceway face (11) satisfy "$t \geq A + (B/\cos\alpha)$".

FIG. 1

EP 3 096 029 A1

**Description**

Technical Field

The present invention relates to linear motion guiding devices, more particularly to a linear motion guiding device having a guide rail that an end has been made into a tapered shape.

Background Art

Conventionally, in a case of linking and using the guide rails of the linear motion guiding device used in a machine toll and so forth, when a connection accuracy of a connecting portion configured by connecting together their mutual end faces was low, it sometimes happened that a level difference that they were misaligned in a width direction on the connecting portion was generated. When such a level difference was generated, an operation failure occurred and a ball was damaged when the slider passed the connecting portion, and due to which it sometimes happened that the durability as the linear motion guiding device was reduced.

Therefore, conventionally, it was conducted to manually form a chamfer on an end of a raceway face of a rolling body by using a hand grinder.

However, when the chamfer is manually formed on the end of the raceway face of the rolling body, machining man-hour is increased and it becomes difficult to form a smooth inclined portion. Accordingly, it was difficult to solve the above-mentioned problems which would occur when the slider passes the connecting portion of the guide rails.

In addition, in the conventional linear motion guiding device having the guide rail that the chamfer has been formed on the end of the raceway face of the rolling body, when the rolling body collides with a chamfered portion, an indentation is generated on the rolling body and there is a possibility that peeling may occur on the rolling body while the slider is traveling on the guide rail. In addition, there is a possibility that the chamfered portion may be chipped every time the rolling body collides with the chamfered portion of the guide rail. Further, there is a possibility that positional misalignment of the mutual guide rails which are linked together may occur due to collision of the rolling body with the chamfered portion.

Accordingly, techniques of providing an inclination on the connecting portion are disclosed in Patent Literature 1 and Patent Literature 2, aiming to prevent a reduction in durability of the above-mentioned connecting portion.

The invention disclosed in Patent Literature 1 is a technique of forming a raceway face of a rolling body on an end of a track rail into the gently inclined raceway face of the rolling body by removing elastic deformation of the end of the track rail by removing a wedge member from a slit provided in the connecting portion of the track rail.

On the other hand, the invention disclosed in Patent Literature 2 is a technique of providing a crowning on a connecting portion of an arc rail. A length of this crowning is defined to 1/2 of a length of a slider and a depth of the crowning is set to a ball deformation amount when loading a static rated load.

Citation List

Patent Literature

PTL 1: Japanese Patent Publication No. H05-32610
PTL 2: Japanese Patent No. 4259857

Summary of Invention

Technical Problem

However, also in the technique disclosed in Patent Literature 1, it sometimes happened that when attaching the guide rails and mutually abutting the rail end faces in a production site and so forth, it sometimes happened that the level difference was generated depending on flatness and straightness of abutting faces of the rails and a size tolerance of the rail abutting faces and so forth.

In addition, when attaching the guide rails to a base and so forth with bolts, it sometimes happened that the end faces of the guide rails were misaligned depending on installation position accuracy of a bolt through hole and therefore the level difference was generated.

On the other hand, although also in the embodiment disclosed in Patent Literature 2, 1 to 50 μm are exemplified as the depth of the inclined portion for preventing the rolling body from being damaged, there is a possibility that the depth of the inclined portion may become excessive or insufficient depending on width-direction misalignment on the connecting portion and a load condition and there was concern about the effect of preventing a reduction in durability.

Accordingly, the present invention has been made taking notice of the above-mentioned problems, and an object thereof is to provide a linear motion guiding device which is surely capable of suppressing the reduction in durability of the guide rail that a tapered portion has been provided on its end.

Solution to Problem

An embodiment of the linear motion guiding device for attaining the above-mentioned object is, in a linear motion guiding device having a guide rail, a slider, and a plurality of rolling bodies,
the guide rail and the slider respectively have raceway faces which form a rolling path of the rolling bodies at mutually facing positions,
the raceway faces extend in a longitudinal direction of
the guide rail,
the rolling bodies are arranged on the rolling path,
the slider moves relative to the guide rail via the rolling bodies,
an end of the guide rail is gradually reduced in a width direction size in the longitudinal direction so as to configure a tapered portion,
a length L of the tapered portion is not less than 0.5 times and not more than 1.5 times a diameter r of the rolling body, and
a depth t of the tapered portion, a width direction amount of level difference A of one guide rail and another guide rail, a rolling body elastic deformation amount B, and a contact angle $\alpha$ of the rolling body relative to the raceway face satisfy the following (1)
[Numerical Formula 1]

$$t \geq A + \frac{B}{\cos\alpha} \cdot \cdot \cdot \cdot \cdot \cdot \cdot \cdot \cdot \cdot \cdot \cdot \cdot \cdot \cdot (1)$$

Here, in the above-mentioned linear motion guiding device, when a width size of the guide rail is S(mm), an external load thereof in a radial direction is F(N), a dynamic rated load thereof is C(N), and the rolling body is a ball, the rolling body elastic deformation amount B(mm) may be expressed by the following (2).
[Numerical Formula 2]

$$B = 0.001 \times \left\{ 2S\left(\frac{F}{C}\right) + 0.35S \right\} \cdot \cdot \cdot \cdot \cdot \cdot (2)$$

In addition, in the above-mentioned linear motion guiding device, when a width size of the guide rail is S(mm), an external load thereof in a radial direction is F(N), a dynamic rated load thereof is C(N), and the rolling body is a roller, the rolling body elastic deformation amount B(mm) may be expressed by the following (4).
[Numerical Formula 3]

$$B = 0.001 \times \left\{ 0.55S\left(\frac{F}{C}\right) + 0.06S \right\} \cdot \cdot \cdot \cdot \cdot \cdot (4)$$

Advantageous Effects of Invention

According to one aspect of the present invention, the linear motion guiding device which is surely capable of suppressing the reduction in durability of the guide rail that the tapered portion has been provided on the end can be provided.

Brief Description of Drawings

FIG. 1 is a perspective view illustrative of a configuration in an embodiment of a linear motion guiding device.
FIG. 2 is a plan view illustrative of a configuration of a guide rail in an embodiment of the linear motion guiding device.

FIGS. 3(a) to 3(d) are plan views illustrative of relations between a length of a tapered portion and a rolling body in an embodiment of the linear motion guiding device.

FIG. 4 (a) is a sectional diagram along the line IVa-IVa in FIG. 1, and (b) and (c) are side views illustrative of behaviors of the rolling body relative to an edge.

FIG. 5 is a plan view illustrative of a configuration when positions of the connected guide rails have been misaligned.

Description of Embodiments

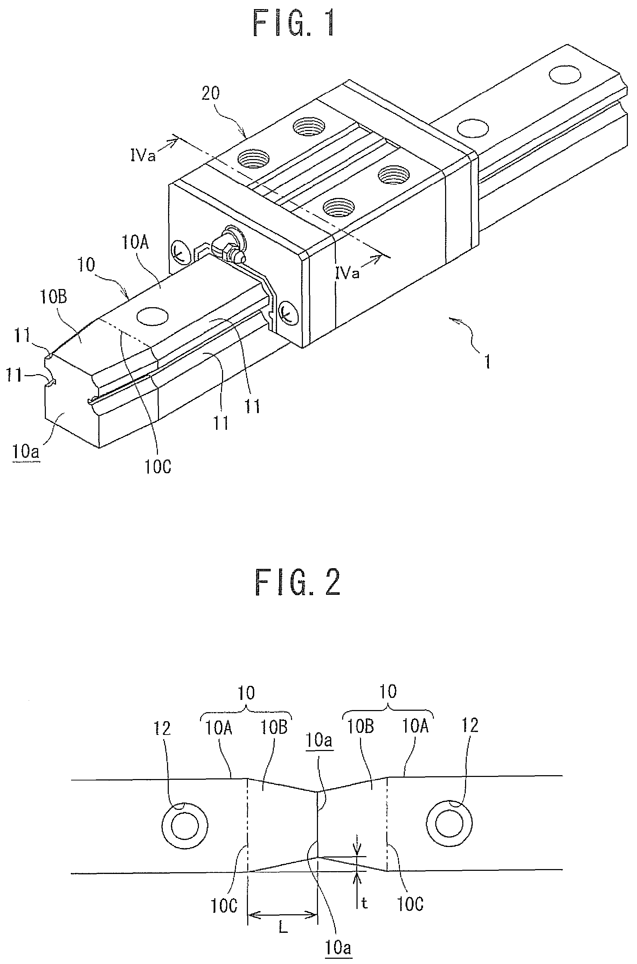

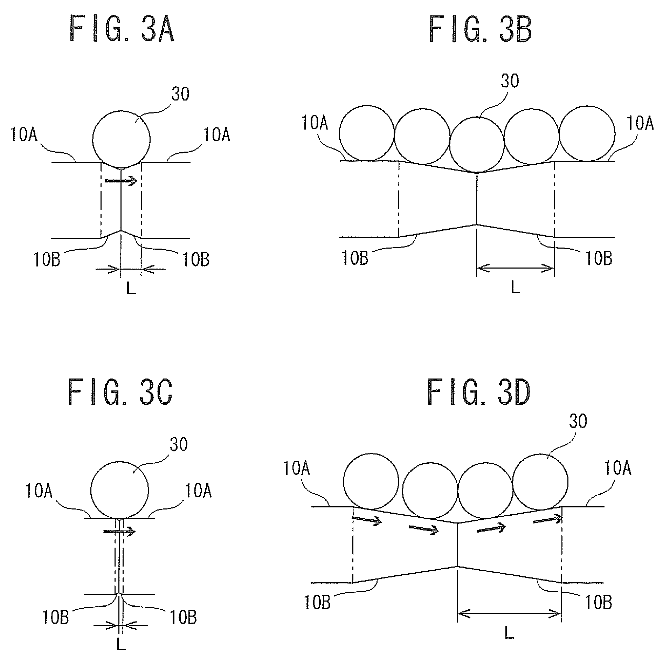

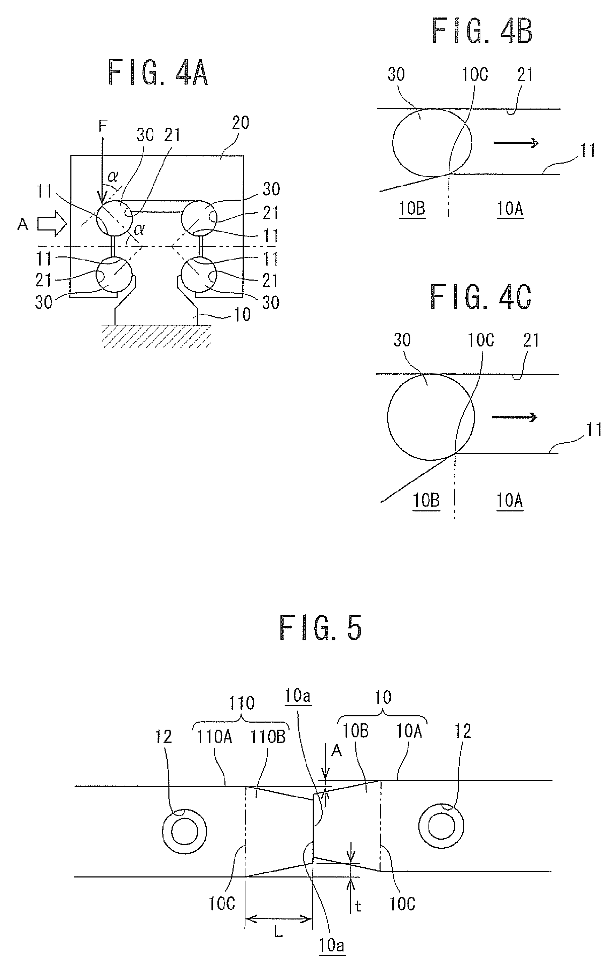

In the following detailed description, many specific particulars will be described so as to provide full understanding of embodiments of the present invention. However, it will become apparent that one or more embodiment (s) can be carried out even in the absence of such specific particulars. In addition, well known structures and devices are schematically illustrated in order to simplify the drawings. In the following, an embodiment of a linear motion guiding device will be described with reference to the drawings. FIG. 1 is a perspective view illustrative of a configuration in an embodiment of the linear motion guiding device. In addition, FIG. 2 is a plan view illustrative of a configuration of a guide rail in an embodiment of the linear motion guiding device. In addition, FIGS. 3(a) to 3(d) are plan views illustrative of relations between a length of a tapered portion and a rolling body in an embodiment of the linear motion guiding device. In addition, FIG. 4(a) is a sectional diagram along the line IVa-IVa in FIG. 1 and FIGS. 4 (b) and 4(c) are side views illustrative of behaviors of the rolling body relative to an edge.

<Configuration of the linear motion guiding device>

As illustrated in FIG. 1, the linear motion guiding device 1 of the present embodiment is provided with a guide rail 10, and a slider 20 which has been assembled striding over the guide rail 10. Two raceway faces 11, 11 which extend in a longitudinal direction of the guide rail 10 are formed on both side faces of the guide rail 10. The slider 20 has a U-shaped sectional shape and is situated in a state that the slider 20 strides over the guide rail 10 which has been arranged on its opening side.

In addition, as illustrated in FIG. 4(a), the slider 20 has raceway faces 21, 21 which face the raceway faces 11 on its inner surface and a rolling path is formed by the raceway faces 11 and the raceway faces 21. This rolling path communicates with not illustrated rolling body return path and direction change path so as to form an endless track, and a plurality of rolling bodies 30 is loaded inside the rolling path. The plurality of these rolling bodies 30 endlessly circulates while rolling in the rolling path in association with relative movement of the slider 20 relative to the guide rail 10.

<Tapered portion>

As illustrated in FIG. 1, the guide rail 10 of the linear motion guiding device 1 of the present embodiment has a body portion 10A, and a tapered portion 10B which is provided on an end of the body portion 10A and is made by reducing the size in a width direction along a longitudinal direction. Here, the above-mentioned "width direction" indicates a direction which is orthogonal to the longitudinal direction and a height direction (the directions that the slider 20 and a base (not illustrated) are installed with the guide rail 10 being set as a reference). In addition, the body portion 10A is a portion that the sectional shape on a surface which is orthogonal to the longitudinal direction is almost the same. In addition, a boundary portion between the body portion 10A and the tapered portion 10B is defined as an edge portion 10C.

As illustrated in FIG. 2, the linear motion guiding device 1 of the present embodiment is operated by abutting and connecting together mutual end faces (also end faces of the tapered portions 10B) 10a of the guide rails 10 that the tapered portions 10B have been provided on the ends of the body portions 10A.

[Length L of the tapered portion]

A length (the size of the tapered portion 10B in the longitudinal direction) L of the tapered portion 10B is not less than 0.5 times and not more than 1.5 times a diameter r of the rolling body 30. Here, relations between the length of the tapered portion and the rolling body will be described with reference to FIGS. 3(a) to (d). Incidentally, as the rolling body, a "ball" and a "roller" may be given, and the diameter r in a case where it is the "roller" in them indicates a dimeter of a circular plane centering on its (rotation) axis.

First, in a case where the length L is 0.5 times the diameter r, as illustrated in FIG. 3(a), the rolling body 30 is decelerated by the tapered portion 10B and therefore does not strongly strike against the edge portion 10C which is the boundary portion between the body portion 10A and the tapered portion 10B. Accordingly, the rolling body 30 is not damaged.

Next, in a case where the length L is 1.5 times the diameter r, as illustrated in FIG. 3(b), only three rolling bodies 30 are present on the tapered portions 10B, 10B and therefore the rolling bodies 30 do not stagnate in the rolling path.

Next, in a case where the length L is less than 0.5 times the diameter r, as illustrated in FIG. 3(c), the rolling body 30 strongly strikes against the edge portion 10C and the rolling body 30 may be damaged in some cases.

Next, in a case where the length L exceeds 1.5 times the diameter r, as illustrated in FIG. 3(d), the rolling bodies 30 are decelerated when rushing up the tapered portion 10B. Therefore, the rolling bodies 30 stagnate in the rolling path and it is feared that the slider 20 may not travel.

[Depth t of the tapered portion]

A depth (the size which has been reduced in the width direction on one side face from the edge portion 10C to the end face 10a) t of the tapered portion 10B satisfies the following (1). Here, in the following (1), A is a width direction connecting portion level difference amount (mm) between one guide rail and another guide rail and B is a rolling body elastic deformation amount (mm). It is preferable that a contact angle $\alpha$ be 45° to 50°.
[Numerical Formula 4]

$$t \geqq A + \frac{B}{\cos \alpha} \cdot \cdot \cdot \cdot \cdot \cdot \cdot \cdot \cdot \cdot \cdot \cdot \cdot \cdot (1)$$

[Connecting portion level difference amount A]

The connecting portion level difference amount A (mm) indicates a size of a level difference which is generated in the width direction when the end faces 10a, 10a of the two guide rails 10, 10 have been mutually brought into abutment as illustrated in FIG. 5. This level difference is generated depending on, for example, positional accuracy of a bolt through-hole 12 for fixing the guide rail 10 to a base (not illustrated), flatness and straightness of the end face 10a of the guide rail 10, a size tolerance of the end face 10a of the guide rail 10 and so forth.

[Rolling body elastic deformation amount B]

The rolling body elastic deformation amount B is an elastic deformation amount (mm) when the rolling body 30 in the rolling path has received a radial load as illustrated in FIGS. 4(a) to 4(c). Here, as illustrated in FIG. 4(a), a horizontal component (an orientation "A" in the drawing) of the elastic deformation amount of the rolling body 30 when it has received the radial load F can be expressed by B/tan$\alpha$. However, as illustrated in FIGS. 4(b) and 4(c), when the horizontal elastic deformation amount is not largely taken into account, the rolling body 30 strikes against the edge 10C while being left deformed and stress that the rolling body 30 receives from the edge 10C is increased. Accordingly, the horizontal component of the elastic deformation amount of the rolling body 30 has been defined as the rolling body elastic deformation amount B/cos$\alpha$ in the sense of liberally estimating it.

Here, definition of the rolling body elastic deformation amount B is made different depending on whether the rolling body 30 is the "ball" or the "roller".

In a case where the rolling body 30 is the "ball", the rolling body elastic deformation amount B is expressed by the following (2).
[Numerical Formula 5]

$$B = 0.001 \times \left\{ 2S\left(\frac{F}{c}\right) + 0.35S \right\} \cdot \cdot \cdot \cdot \cdot \cdot (2)$$

That is, in the case where the rolling body 30 is the "ball", the depth t of the tapered portion 10B is defined as the following (3).
[Numerical Formula 6]

$$t \geqq A + \frac{0.001}{\cos \alpha} \left\{ 2S\left(\frac{F}{c}\right) + 0.35S \right\} \cdot \cdot \cdot \cdot \cdot \cdot (3)$$

On the other hand, in a case where the rolling body 30 is the "roller", the rolling body elastic deformation amount B is expressed by the following (4).
[Numerical Formula 7]

$$B = 0.001 \times \left\{ 0.55S \left(\frac{F}{C}\right) + 0.06S \right\} \cdots \cdots (4)$$

That is, in the case where the rolling body 30 is the "roller", the depth t of the tapered portion 10B is so defined as in the following (5).
[Numerical Formula 8]

$$t \geqq A + \frac{0.001}{\cos\alpha} \left\{ 0.55S \left(\frac{F}{C}\right) + 0.06S \right\} \cdots \cdots (5)$$

Here, in the above-mentioned formulae (2) to (5), "S" indicates a width size (mm) of the guide rail 10, "F" indicates an external load (N) in a radial direction (see FIG. 4(a)), "C" indicates a dynamic rated load (N). Incidentally, in the case where the rolling body 30 is the ball, the dynamic rated load C indicates a load from an upper direction of the slider 20 that a direction and a magnitude with which a rated fatigue life would reach 50 km do not fluctuate. In addition, in the case where the rolling body 30 is the roller, a load from the upper direction of the slider 20 that a direction and a magnitude with which the rated fatigue life would reach 100 km do not fluctuate is defined as the dynamic rated load C.

The reduction in durability of the connecting portion can be surely suppressed by defining the depth t of the tapered portion 10B in accordance with the kind of the rolling body 30, and the connection portion level difference amount A and the load condition in this way.

In addition, since a shock that the rolling body gives to the tapered portion when passing the two guide rails is weak by having configured the tapered portions on the ends of the guide rails, occurrence of peeling of the rolling body, chipping of the end of the guide rail, positional misalignment of the mutual guide rails and so forth can be reduced.

Although, in the foregoing, the present invention has been described with reference to the specific embodiment, it does not intend to limit the invention by these descriptions. Also other embodiments of the present invention will become apparent to a person skilled in the art together with various modified examples of the disclosed embodiment by referring to the description of the present invention. Accordingly, it is to be understood that the scope of the patent claims also covers these modified examples or embodiments included in the scope and the gist of the present invention. Reference Signs List

| | |
|---|---|
| 10 | guide rail |
| 10B | tapered portion |
| 11 | (guide rail side) raceway face |
| 20 | slider |
| 21 | (slider side) raceway face |
| 30 | rolling body |

## Claims

**1.** A linear motion guiding device having:

a guide rail; a slider; and a plurality of rolling bodies, wherein
the guide rail and the slider respectively have raceway faces which form a rolling path of the rolling bodies at mutually facing positions,
the raceway faces extend in a longitudinal direction of the guide rail,
the rolling bodies are arranged on the rolling path,
the slider moves relative to the guide rail via the rolling bodies,
an end of the guide rail is gradually reduced in a width direction size in the longitudinal direction to configure a tapered portion,
a length L of the tapered portion is not less than 0.5 times and not more than 1.5 times a diameter r of the rolling body, and
a depth t of the tapered portion, a width direction amount of level difference A of one guide rail and another guide rail, a rolling body elastic deformation amount B, and a contact angle $\alpha$ of the rolling body relative to the raceway face satisfy the following (1).

[Numerical Formula 1]

$$t \geqq A + \frac{B}{\cos\alpha} \cdot \cdot \cdot \cdot \cdot \cdot \cdot \cdot \cdot \cdot \cdot \cdot \cdot \cdot \cdot (1)$$

2. The linear motion guiding device according to claim 1, wherein
   when a width size of the guide rail is S(mm), an external load of the guide rail in a radial direction is F(N), a dynamic rated load of the guide rail is C, and the rolling body is a ball, the rolling body elastic deformation amount B is expressed by the following (2).
   [Numerical Formula 2]

$$B = 0.001 \times \left\{ 2 S \left( \frac{F}{C} \right) + 0.35 S \right\} \cdot \cdot \cdot \cdot \cdot \cdot (2)$$

3. The linear motion guiding device according to claim 1 wherein
   when a width size of the guide rail is S(mm), an external load of the guide rail in a radial direction is F(N), a dynamic rated load of the guide rail is C, and the rolling body is a roller, the rolling body elastic deformation amount B is expressed by the following (4).
   [Numerical Formula 3]

$$B = 0.001 \times \left\{ 0.55 S \left( \frac{F}{C} \right) + 0.06 S \right\} \cdot \cdot \cdot \cdot \cdot \cdot (4)$$

# FIG. 1

# FIG. 2

# FIG. 3A

30

10A    10A

10B    10B

L

# FIG. 3B

30

10A    10A

10B    10B

L

# FIG. 3C

30

10A    10A

10B    10B

L

# FIG. 3D

30

10A    10A

10B    10B

L

# FIG. 4A

# FIG. 4B

# FIG. 4C

# FIG. 5

## INTERNATIONAL SEARCH REPORT

| | International application No. |
|---|---|
| | PCT/JP2015/000165 |

**A. CLASSIFICATION OF SUBJECT MATTER**
*F16C29/06*(2006.01)i

According to International Patent Classification (IPC) or to both national classification and IPC

**B. FIELDS SEARCHED**

Minimum documentation searched (classification system followed by classification symbols)
F16C29/06

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 62-056660 A (NSK Ltd.), 12 March 1987 (12.03.1987), page 2, lower left column, line 5 to page 4, upper left column, line 7; fig. 4 to 6 (Family: none) | 1-3 |
| A | JP 2010-261483 A (THK Co., Ltd.), 18 November 2010 (18.11.2010), paragraphs [0006] to [0032]; fig. 1 to 6 (Family: none) | 1-3 |
| A | JP 2002-005162 A (THK Co., Ltd.), 09 January 2002 (09.01.2002), paragraphs [0002] to [0008]; fig. 7 to 10 (Family: none) | 1-3 |

| ☒ Further documents are listed in the continuation of Box C. | ☐ See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 12 March 2015 (12.03.15) | 24 March 2015 (24.03.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/000165

C (Continuation).   DOCUMENTS CONSIDERED TO BE RELEVANT

| Category* | Citation of document, with indication, where appropriate, of the relevant passages | Relevant to claim No. |
|---|---|---|
| A | JP 63-026417 A  (Nippon Thompson Co., Ltd.), 04 February 1988 (04.02.1988), entire text; all drawings & US 4692036 A          & DE 3716024 A1 | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0532610 B

- JP 4259857 B